# EUROPEAN PATENT APPLICATION

(11) **EP 4 687 121 A1**
(43) Date of publication of application: **04.02.2026**
(21) Application number: 25193912.0
(22) Date of filing: 04.08.2025
(51) Int. Cl.: G06V 20/52, G08B 13/19

(54) **A METHOD AND SYSTEM FOR UPDATING BACKGROUND INFORMATION OF A PIXEL MATRIX**

(30) Priority: 02.08.2024 EP 24382865
(71) Applicant: Rade Tecnologías, S. L., 50197 Zaragoza (ES)
(72) Inventor: DELGADO ACARRETA, Raúl, Zaragoza (ES); VICENTE DUEÑAS, Daniel, Zaragoza (ES); FANDOS VILLANUEVA, Andrés, Zaragoza (ES); LATAS GUILLÉN, Víctor Manuel, Zaragoza (ES)
(74) Representative: Elion IP, S.L.

(57) **Abstract**

The disclosure refers to methods and systems for updating background information of a pixel matrix generated by presence sensors. The pixel matrix comprises background information of a presence detection field covered by the presence sensor. The method comprises:
a) detecting a first set of pixels comprising pixels indicative of presence having adjacent pixels not being indicative of presence;
b) for each particular pixel of the first set of pixels, updating (102) a temperature value of the background of the particular pixel of the first set of pixels;
c) detecting a second set of pixels comprising pixels indicative of presence that have adjacent pixels previously updated;
d) for each particular pixel of the second set of pixels, updating (104) a temperature value of the background of the particular pixel of the second set of pixels; and,
e) executing steps c) and d) until there are no more pixels indicative of presence to be updated.

## Description

### TECHNICAL FIELD

The present disclosure refers to the field of presence sensors. More particularly, the present disclosure refers to a method and system for updating background information of a pixel matrix generated by presence sensors. The updating of the background information of a pixel matrix improves the reliability in detecting presence, e.g., human presence or animal presence, within the area or space being monitored by the presence sensors.

### BACKGROUND

Presence detectors generally work according to the following principle: they detect thermal radiation in their surroundings, that is, in their detection area. If thermal radiation is detected in the detection area, for example, caused by a person approaching the presence detector, the presence detector converts the radiation into a measurable electric signal and, for example, the light of the room where the presence detector is installed is switched on upon detection of presence. The most sensitive presence detectors may divide their detection area evenly into up to 1000 zones. Like a chessboard, the zones run through the entire detection area. Even minimum changes in the thermal image, such as typing on the keyboard in an open plan office, can be detected. These zones typically correspond to the different pixels of a pixel matrix generated by the presence sensor. Usually, the higher the number of pixels in the pixel matrix, the higher the sensitivity of the presence sensor.

Patent document EP3789978A1 discloses a system for providing information about presence in a space. This system also provides information about the background of the space or room where the presence detector is installed, thereby being able to more precisely discriminate human beings or animals from other elements that may irradiate heat within the same space. The background information of the pixel matrix generated by the presence sensor disclosed in document EP3789978A1 is updated by using the average temperature of the neighbour pixels of the pixel being analysed. The pixel being analysed is a pixel indicating human presence and the neighbour pixels used to update said analysed pixel are pixels not indicating human presence. If all the neighbour pixels of the pixel under analysis indicate human presence, then, the following round of neighbour pixels is checked to see if there is some pixel with no human presence. If again all 2nd-round neighbour pixels indicate human presence, it is established that the pixel matrix cannot be updated. Hence, the method disclosed in EP3789978A1 is unable to update the background temperatures of the full pixel matrix when one of the analysed pixels is completely surrounded by at least two concentric rings of neighbour pixels indicating all human presence, which can happen very often.

Thus, there is a need in the state of the art for a method and system for updating the background information of pixel matrices generated by presence sensors that avoid the mentioned drawbacks, so they are able to update said pixel matrices independently of the number and disposition of the pixels that indicate presence in the pixel matrix.

### SUMMARY

A first aspect of the present disclosure refers to a method for updating background information of a pixel matrix, the pixel matrix being generated by a presence sensor. The pixel matrix is associated with a space or area that is being monitored by the presence sensor in such a way that each pixel of the pixel matrix represents the temperature of a zone of the monitored space or area. The pixel matrix comprises background information of the presence detection field covered by the presence sensor.

The method comprises the steps of:
a) detecting a first set of pixels of the pixel matrix comprising pixels indicative of presence that have at least one adjacent pixel not being indicative of presence. The pixels that are indicative of presence are those whose temperature value is above a predefined threshold. Similarly, the pixels that are not indicative of presence are those pixels whose temperature value is equal or below the predefined threshold. This threshold can be set and modified by a user, depending on the particular circumstances, or it can be a default value;
b) for each particular pixel of the first set of pixels, updating a temperature value of the background of that particular pixel of the first set of pixels with an average value of the temperature values of the pixels adjacent to the particular pixel not being indicative of presence. Also, in this step b), if one or more adjacent pixels have been previously updated, the background of the particular pixel (of the detected first set of pixels) is updated with an average of the temperature value of adjacent pixels not being indicative of presence and the background temperature value of those pixels that have been previously updated;
c) detecting a second set of pixels of the pixel matrix comprising pixels indicative of presence that have at least one adjacent pixel previously updated. Thus, the second set of pixels has at least one pixel previously updated at step b) and may further have one or more adjacent pixels indicative of presence and not already updated;
d) for each particular pixel of the second set of pixels, updating a temperature value of the background of that particular pixel of the second set of pixels with an average value of the temperature values of pixels adjacent to the particular pixel not being indicative of presence and of the background temperature values of updated adjacent pixels; and
e) executing steps c) and d) until there are no more pixels in the pixel matrix indicative of presence to be updated.

That is to say, step e) is executed until all the pixels in the pixel matrix indicative of presence have been processed and thus, the background information of the whole pixel matrix has been updated.

Hence, the method herein disclosed updates the temperature value of the background of the pixels that indicate presence from outside to inside. The method uses the temperature value of the adjacent pixels that are not indicative of presence and/or the temperature value of the background of the adjacent pixels that have been previously updated in a first iteration to update the temperature value of the background of the pixels detecting presence in the pixel matrix, said pixels detecting presence in the pixel matrix having at least one adjacent pixel not indicating presence. The method further uses the temperature value of the adjacent pixels not indicative of presence and/or the temperature value of the background of the pixels previously processed in a second and subsequent iteration to update the temperature value of the background of pixels detecting presence in the pixel matrix, said pixels detecting presence in the pixel matrix having at least one adjacent pixel have been processed in a previous iteration, until all the pixels indicating presence have been updated. In this way, the method is able to guarantee that the background information of all the pixels indicative of presence of the pixel matrix are updated. This improves the sensitivity of the presence sensor by more precisely discriminating human beings or animals from other elements that may irradiate heat within the same space being monitored by the presence sensor.

The method of the present disclosure enables completely updating the background temperature of all pixels in the pixel matrix of a presence sensor, which increases the sensitivity of the presence sensor thereof. The background temperature of each pixel is generally used as reference temperature value for detecting changes within the presence sensor, for example, a warm object within the space monitored by the presence sensor. Thus, upon executing the method of updating the background information of the pixel matrix, the method can discriminate a human being or an animal from other heat irradiating elements within the same space being monitored by the presence sensor.

As used herein, pixels "adjacent" to a given pixel include at least the pixels located immediately above, below, to the right and to the left of the given pixel; that is, a non-peripheral pixel includes four adjacent pixels.

In some embodiments, adjacent pixels can also include pixels located at the corners (i.e., diagonals) of the given pixel; that is, in these embodiments, adjacent pixels of a given non-peripheral pixel include up to eight pixels that surround the given pixel. Pixels located at the periphery of the pixel matrix, i.e., peripheral pixels, may not be surrounded by eight pixels but only by three or five pixels, so only these three or five pixels are considered as adjacent pixels for these peripheral pixels.

In some embodiments, steps a) and c) are carried out by sequentially processing every pixel of the pixel matrix. That is to say, the method may process the pixels of the pixel matrix sequentially to select those pixels that are part of the first, second and subsequent set of pixels. Preferably, the pixel of the pixel matrix which is first processed, is a pixel located at one of the corners of the pixel matrix, and more preferably, the pixel is located at the upper left corner of the pixel matrix.

Similarly, steps b) and d) can be carried out sequentially processing every pixel in each of the set of pixels. In other words, the method may sequentially update each pixel of the pixels in the set of pixels previously selected. Preferably, the first pixel to be updated is the top leftmost pixel of the pixel matrix while the last pixel to be updated is the bottom rightmost pixel of the matrix.

In some embodiments, sequentially processing the pixels comprises processing pixels adjacent to each other. These pixels are, preferably, pixels located immediately to the right in the same row of the pixel matrix or a first pixel of a row below when there are no more pixels in the same row to the right.

In some embodiments, the pixel matrix has a size of 'MxN', being 'M' the pixel matrix size in horizontal direction and 'N' the pixel matrix size in vertical direction. 'M' and 'N' are integers greater than 1. In such embodiments, the method comprises sequentially processing the pixel matrix starting from an initial pixel (0,0) to a final pixel (M,N). Preferably, this initial pixel may be one of the pixels located at any of the corners of the pixel matrix, and more preferably, the pixel located at the upper left corner of the pixel matrix.

Preferably, the pixels of the pixel matrix may be processed from top to bottom and from left to right.

In some embodiments, the method comprises updating the background information of the pixel matrix in response to detecting presence by the presence sensor or on a periodic basis. For example, the background information of the pixel matrix may be updated every 1 second, every 5 seconds, 10 seconds, 30 seconds or every 1 minute. Other time periods may be set up for triggering the updating of the background information of the pixel matrix.

In some further embodiments, when the updating of the background information is carried out on a periodic basis, prior to executing the method for updating the background information, the processing unit may request for an updated version of the pixel matrix to the presence sensor. In such embodiments, upon reception of the request, the detection sensor may generate the pixel matrix of the monitored space and send it to the processing unit to be updated.

In some embodiments, the method generates a presence signal in response to detecting presence by the presence sensor within the space being monitored.

In some embodiments, the method comprises using the presence signal previously generated to actuate over an electric, electronic or mechanical system. For example, the presence signal may be used to trigger an alarm or to switch the lights in the room where the presence detector is located on, among other possible uses.

In some embodiments, the presence sensor comprises an array of sensing elements. While in some implementations each sensing element may measure the temperature of one of the pixels of the pixel matrix, preferably, each sensing element may provide a set of temperature measures corresponding to a group of pixels of the pixel matrix. The higher the number of sensing elements in the presence sensor, the higher the resolution of the presence sensor.

In some embodiments, the presence sensor can be a temperature-based matrix presence sensor or a passive infrared array sensor.

In some embodiments, detecting presence by the presence sensor includes detecting a human being or an animal.

A second aspect of the present disclosure is a method for providing information about presence in a space. The method comprises:
- obtaining a pixel matrix from a presence sensor, the pixel matrix being associated with a space being monitored by the presence sensor and comprising background information of a presence detection field covered by the presence sensor. The background information comprises temperature values for each pixel of the pixel matrix;
- updating the background information of the presence detection field as explained with regard to the method for updating background information of a pixel matrix previously disclosed; and
- generating a presence signal by a processing unit in response to detecting presence within the space. The processing unit may be part of the presence sensor or may be a processing unit independent from the presence sensor. Besides, this processing unit may be located in close proximity to the presence sensor and may be wired to the presence sensor or may be a remote processing unit having wireless communication means (e.g., WiFi, Bluetooth, GPRS, etc.) that communicate with other wireless communication means located in the presence sensor. This presence signal can be used to actuate over an electric, electronic or mechanical system in very different ways, as for example, for triggering an alarm, for switching on lights, etc. Similarly, the absence of the presence signal could also be used to actuate over an electric, electronic or mechanical system, as for example for switching off lights or for stop triggering the alarm, etc.

A third aspect of the disclosure relates to non-transitory computer readable storage medium or to a computer program product comprising instructions which, when the program is executed by a computer, cause the computer to carry out the steps of the method for updating the background information of the pixel matrix previously disclosed.

A fourth aspect of the present disclosure refers to a system for updating the background information of a pixel matrix. The system comprises a presence sensor that is configured to generate the pixel matrix associated with a presence detection field of a space being monitored by the presence sensor and a processing unit in communication with the presence sensor that is configured for:
a) detecting a first set of pixels of the pixel matrix comprising pixels indicative of presence that have at least one adjacent pixel not being indicative of presence, the pixels being indicative of presence when a temperature value of the pixel is above a predefined threshold;
b) for each particular pixel of the first set of pixels, updating a temperature value of the background of the particular pixel of the first set of pixels with:
   - an average value of the temperature values of the pixels adjacent to the particular pixel not being indicative of presence, or with:
   - an average value of the temperatures of adjacent pixels not being indicative of presence and of the background temperature of adjacent pixels previously updated;
c) detecting a second set of pixels of the pixel matrix comprising pixels indicative of presence that have at least one adjacent pixel previously updated,
d) for each particular pixel of the second set of pixels, updating a temperature value of the background of that particular pixel of the second set of pixels with an average value of the temperature values of the adjacent pixels not being indicative of presence and of the background temperatures of the updated adjacent pixels; and
e) executing steps c) and d) until there are no more pixels in the pixel matrix indicative of presence to be updated.

Step e) can be executed as many times as required until all the pixels indicative of or detecting presence have been processed and their background temperature values have been updated. This may imply detecting and updating of a third set of pixels, a fourth set of pixels and so on.

In some embodiments, the presence sensor is a temperature-based matrix presence sensor or a passive infrared array sensor.

While in some embodiments, the processing unit may be integrated into the presence sensor in some other embodiments, the processing unit may be an independent element from the presence sensor.

The method and system herein disclosed present some advantages over the existing prior art. In particular, the solution herein described is able to update the background information of every pixel of the pixel matrix generated by a presence sensor when required, in an easy, reliable and fast way.

The method can be a computer-implemented method that runs in one or more processing devices, in an isolated manner and/or in a distributed manner. That is to say, one, some or all steps may be run by a same processing device, or one or some steps may be run by one processing device and some other step or steps may be run by one or more other processing devices or even be run in distributed manner, which means that several processing devices cooperate to run one or more steps. In this sense, the steps are digitally run.

The different aspects and embodiments defined in the foregoing may be combined with one another, as long as they are compatible with each other.

Additional advantages and features of the present disclosure will become apparent from the detail description that follows and will be particularly pointed out in the appended claims.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a flow diagram of the method for updating the background information of the pixel matrix, according to an embodiment of the present disclosure.
Figures 2 to 7 show a pixel matrix at different stages of the process for updating its background information, according to an embodiment of the present disclosure.
Figure 8 shows a block diagram of the system for updating the background information of the pixel matrix, according to an embodiment of the present disclosure.

### DETAILED DESCRIPTION

The following description is not to be taken in a limiting sense but is given solely for the purpose of describing the broad principles of the disclosure. Embodiments of the disclosure will be described by way of example, with reference to the above-mentioned drawings.

The present disclosure relates to a method for updating background information of a pixel matrix, the pixel matrix being generated or provided by a presence sensor.

In the example now presented, the presence sensor is a temperature-based presence sensor which is a matrix sensor and can be mounted, for example, on the ceiling of a room.

In this example, the presence sensor is an array sensor having 64 pixels or elements, distributed in an 8x8 array, each pixel of the 64 pixels measuring the temperature of a zone inside the room. The 64 pixels cover an area or zone which constitutes the presence detection field covered by the presence sensor.

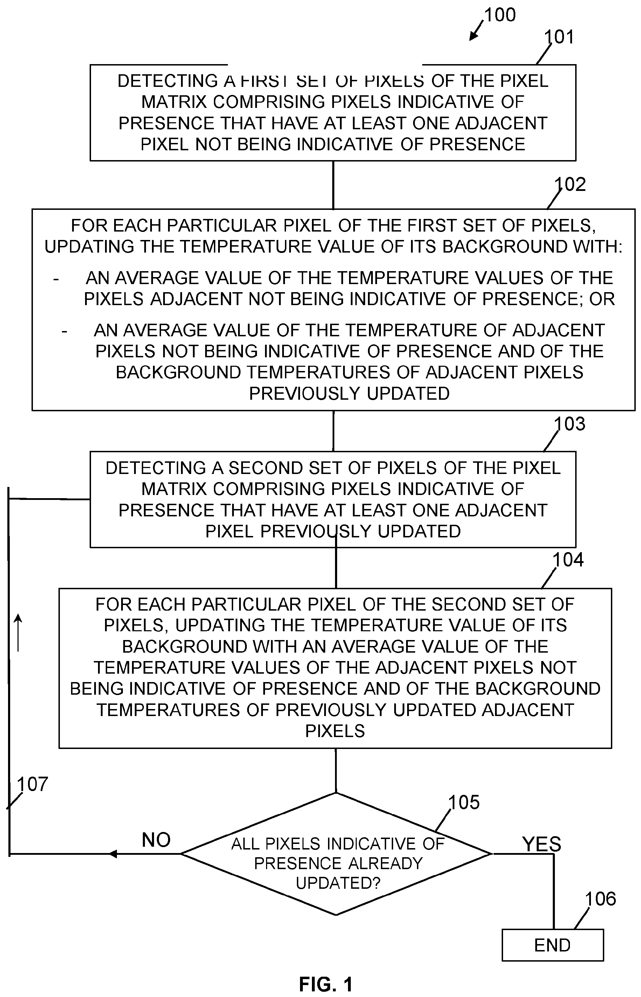

Figure 1 shows a block diagram of the method 100 for updating the background information of the pixel matrix, according to an embodiment of the present disclosure.

At step 101 of the method 100, a first set of pixels of the pixel matrix is detected. This first set of pixels comprises pixels indicative of presence that have adjacent pixels not being indicative of presence.

At step 102 of the method 100, for each particular pixel of the first set of pixels the background temperature value of the particular each pixel of the first set of pixels is updated by:
- averaging the temperature values of the pixels adjacent to the pixel that are not indicative of presence; or by
- averaging the temperature values of adjacent pixels not being indicative of presence and of the background temperature of adjacent pixels previously updated. Preferably, only the adjacent pixels not being indicative of presence could be used for calculating the average temperate value with which the temperature value of the pixels of the first set of pixels is updated.

At step 103 of the method 100, a second set of pixels is detected, this second set of pixels comprises pixels indicative of presence and having at least one adjacent pixel which has been previously updated. These previously updated adjacent pixels are those pixels updated at step 102.

At step 104 of the method 100, for each specific pixel of the second set of pixels, the background temperature value of the specific pixel of the second set of pixels is updated with an average value of the temperature values of the adjacent pixels not being indicative of presence and of the background temperature values of adjacent pixels previously updated. Preferably, the pixels of the second set of pixels can be updated with an average value of the background temperature values of a combination of the adjacent pixels previously updated and adjacent pixels not being indicative of presence.

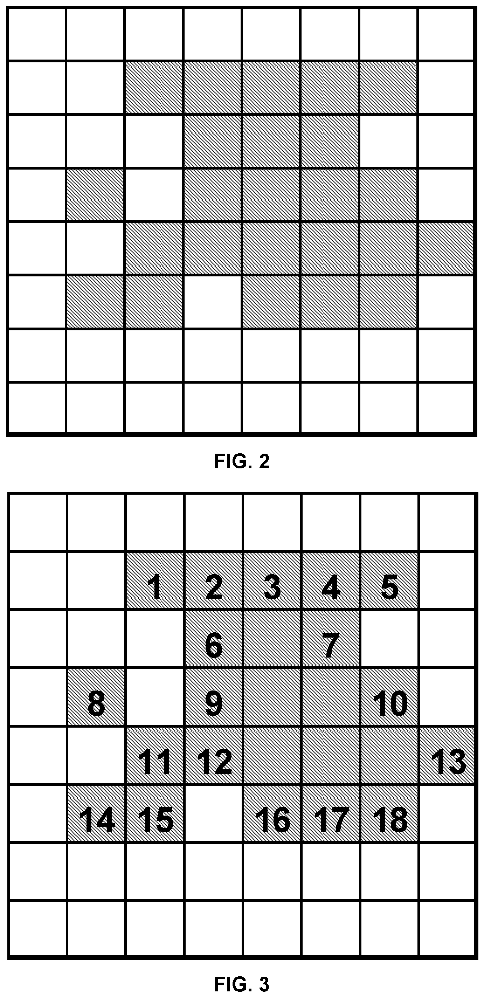

At decision step 105 of the method 100, it is checked whether there still are pixels indicative of presence to be updated. In the affirmative, steps 103 and 104 of the method 100 are repeated; otherwise, the process ends. Every time steps 103 and 104 of the method 100 are executed, a new set of pixels is detected or identified and processed to update the background temperature values of the pixels therein. The pixels of each one of these new sets of pixels have in common that all of them have at least one adjacent pixel that has been updated in an previous iteration of the method, typically, in an immediate previous iteration. Figure 2 shows an example of an 8x8 matrix of pixels, representative of the pixel matrix of a presence sensor. The pixels having presence in Figure 2 have been represented with a vertical shading, that is, pixels filled with a diagonal pattern or shading.

Those diagonally shaded pixels have been determined to have a temperature above a predefined threshold and are indicative of presence.

In step 101, a first set of pixels comprising pixels indicative of presence that have adjacent pixels not being indicative of presence is detected. The pixels detected at this step 101 are shown in Figure 3 as having a number (from 1 to 18). That is, Figure 3 shows the 8x8 matrix of Figure 2, wherein those detected pixels in step 101 and forming the first set of pixels have been numbered, since only those eighteen numbered pixels having an adjacent pixel which is not indicative of presence are updated.

The pixels have been numbered according to the order in which the pixels in the matrix are processed, which order is from top to bottom and from left to right. This just being a possible example of processing. It is also possible that the pixels of the pixel matrix are processed differently: from bottom to top, and from right to left, or any combinations thereof, as long as just pixels having an adjacent pixel not having presence are processed.

In this particular embodiment, adjacent pixels to a given pixel include the pixels located immediately above, below, to the right, to the left and at the corners of the given pixel. Thus, a particular pixel may have up to eight adjacent pixels which can be used for updating the temperature of that particular pixel. In some other embodiments, these adjacent pixels may include only the pixels located immediately above, below, to the right and to the left (excluding pixels located at the corners of the given pixel).

Then, at step 102, the background temperature value of each pixel of the first set of pixels is updated by averaging the temperature values of the pixels adjacent to the pixel that are indicative of presence or by averaging the temperature of adjacent pixels not being indicative of presence and the background temperatures of adjacent pixels which have been previously updated.

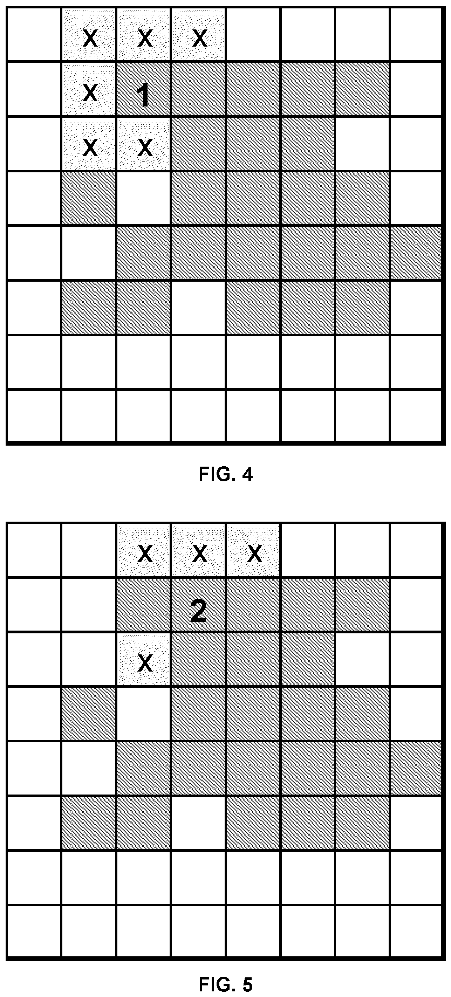

That is, for the purpose of updating, among the adjacent pixels to a given pixel, at least pixels not having presence are used. Thus, as shown in Figure 4, for updating the background temperature value of pixel numbered as 1, the five adjacent pixels marked with an 'x' are used for updating the background temperature value of pixel with number 1.

Similarly, Figure 5 shows the pixels that are at least used for updating the background temperature value of the pixel with number 2 by marking those four pixels with an 'x'.

In this example, the pixels that are being processed within the same iteration are not taken into account for updating the temperature value of the following pixel. That is, when the pixel with number 2 is being processed, the background temperature of the pixel having number 1, which has just been processed, is not considered for the average.

However, in some other examples, it could be also possible that the background temperature value of the pixels which have just been processed is also taken into account (e.g., the background temperature of the updated pixel number 1 is also taken into account for updating the background temperature value of pixel number 2). This alternative would increase the precision of the updated background temperature value and thus, it would increase the sensitivity of the presence sensor.

For instance, for updating the background temperature value of the pixel having number 7, only the pixel located to its right will be used. And for the pixel having number 8, all surrounding pixels except to pixel at its bottom-right corner are used for updating.

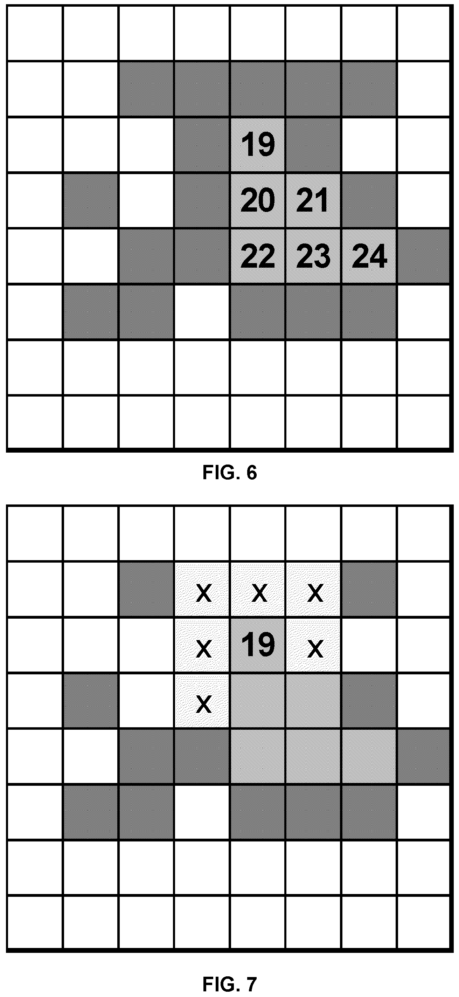

At step 103, a second set of pixels is detected, this second set of pixels comprises pixels indicative of presence and having adjacent pixels which have been previously updated. This is shown in Figure 6, where the pixels that have already been processed and their background temperature values updated (after steps 101 and 102) are depicted as dark shaded. These previously processed pixels are the pixels having numbers 1 to 18 in Figure 3.

The second set of pixels is also shown in Figure 6, which second set of pixels has been represented with a vertical shading as in Figure 3. Similarly, these pixels have been numbered with numbers 19 to 24 in the order that are processed.

At the following step of the method, step 104, the background temperature value of each pixel of this second set of pixels is updated with an average value of the temperature values of the adjacent pixels not being indicative of presence and of the background temperatures of previously updated adjacent pixels.

Thus, as shown in Figure 7, for updating the pixel numbered as 19, the five adjacent pixels having previously been processed or having presence are marked with an 'x' and are pixels used for updating the background temperature of pixel with number 19.

Steps 103 and 104 are repeated (step 105) until there are no more pixels indicative of presence to be updated.

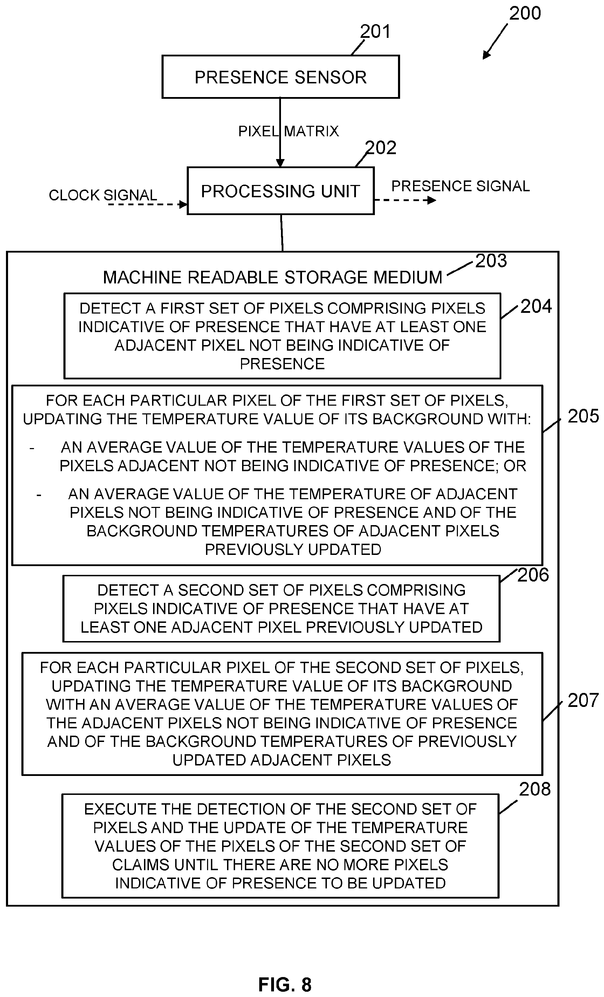

Figure 8 shows a block diagram of the system 200 for updating the background information of the pixel matrix, according to an embodiment of the present disclosure. The system comprises a machine-readable storage medium 203 that stores instructions 204-208 that are executed by the processing unit 202. It should be understood that the system 200 depicted in Figure 8 may include additional components and that some of the components described herein may be removed and/or modified without departing from the scope of the example system 200. Additionally, implementation of system 200 is not limited to such embodiment.

The presence sensor 201 is depicted as generating a pixel matrix that represents the thermal radiation emitted by the objects in the space, for example, a room, that is being monitored by the particular presence sensor 201. The processing unit 202 may include hardware and software logic to execute instructions, such as the instructions 204-208 stored in the machine-readable storage medium 203.

The processing unit 202, in response to the reception of the pixel matrix from the presence sensor 201 or on a periodic basis, e.g., a clock may send a signal to the processing unit when the predefined time period lapses, detects or identifies 204 a first set of pixels of the pixel matrix comprising pixels indicative of presence that have at least one adjacent pixel not being indicative of presence. The pixels that indicate or detect presence of a human or an animal are those pixels whose temperature value is above a predefined threshold. Then, the processing unit 202 updates 205 the temperature value of the background of each one of the pixels of the first set of pixels with the average value of the temperature values of the pixels adjacent to the corresponding pixel. The pixels used to obtain the background temperature average value are those pixels being adjacent to the pixel being analyzed that are not indicative of presence, or the adjacent pixels not being indicative of presence and adjacent pixels previously updated.

After that, the processing unit 202 detects 206 a second set of pixels of the pixel matrix comprising pixels indicative of presence that have at least one adjacent pixel previously updated, and updates 207 a temperature value of the background of each particular pixel of the second set of pixels with an average value of the temperature values of the background of the pixels adjacent to the particular pixel. The pixels used for updating the background temperature value of the particular pixels are adjacent pixels previously updated or a combination of adjacent pixels previously updated and adjacent pixels not being indicative of presence. Then, the processing unit 202 executes the detection step 206 for detecting additional set of pixels and the updating step 207 for updating the background temperature values of the pixels in the additional set of pixels as many times as required until there are no more pixels in the pixel matrix indicative of presence to be updated.

The processing unit 202 may include hardware and software logic to perform the functionalities described above in relation to instructions 204-208. The machine-readable storage medium 203 may be located either in the computing device including the processing unit 202 that executes the machine-readable instructions 204-208, or remote from but accessible to the computing device (e.g., via a computer network) for execution.

As used herein, a "machine-readable storage medium" may be any electronic, magnetic, optical, or other physical storage apparatus to contain or store information such as executable instructions, data, and the like. For example, any machine-readable storage medium described herein may be any of Random Access Memory (RAM), volatile memory, non-volatile memory, flash memory, a storage drive (e.g., a hard drive), a solid-state drive, any type of storage disc (e.g., a compact disc, a DVD, etc.), and the like, or a combination thereof. Further, any machine-readable storage medium described herein may be non-transitory. In examples described herein, a machine-readable storage medium or media may be part of an article (or article of manufacture). An article or article of manufacture may refer to any manufactured single component or multiple components.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method (100) for updating background information of a pixel matrix, the pixel matrix being generated by a presence sensor, being associated with a space being monitored by the presence sensor, the pixel matrix comprising background information of a presence detection field covered by the presence sensor,
wherein the method comprises:
a) detecting (101) a first set of pixels of the pixel matrix comprising pixels indicative of presence that have at least one adjacent pixel not being indicative of presence, the pixels being indicative of presence when a temperature value of the pixel is above a predefined threshold;
b) for each particular pixel of the first set of pixels, updating (102) a temperature value of the background of the particular pixel of the first set of pixels with:
- an average value of the temperature values of the pixels adjacent to the particular pixel not being indicative of presence, or with
- an average value of the temperature values of the adjacent pixels not being indicative of presence and of the background temperature value of updated adjacent pixels;
c) detecting (103) a second set of pixels of the pixel matrix comprising pixels indicative of presence that have at least one adjacent pixel previously updated,
d) for each particular pixel of the second set of pixels, updating (104) a temperature value of the background of the particular pixel of the second set of pixels with an average value of the temperature values of adjacent pixels not being indicative of presence and of the background temperature value of updated adjacent pixels; and
e) executing (107) steps c) and d) until there are no more pixels in the pixel matrix indicative of presence to be updated.

2. The method (100) of claim 1, wherein steps a) and c) are carried out by sequentially processing every pixel of the pixel matrix.

3. The method (100) of claim 2, wherein a first pixel of the pixel matrix which is first processed, is a pixel located at a corner of the pixel matrix.

4. The method (100) of claims 2 or 3, wherein sequentially processing every pixel of the pixel matrix comprises processing pixels adjacent to each other, preferably pixels located immediately to the right in the same row of the pixel matrix or a first pixel of a row below when there are no more pixels in the same row to the right.

5. The method (100) of any one of the preceding claims, wherein the pixel matrix has a size of 'MxN', being 'M' the pixel matrix size in horizontal direction and 'N' the pixel matrix size in vertical direction, and 'M' and 'N' being integers greater than 1, and the method comprises sequentially processing the pixel matrix starting from an initial pixel (0,0) to a final pixel (M,N).

6. The method (100) of any one of the preceding claims, wherein the background information of the pixel matrix is updated in response to detecting presence by the presence sensor or on a periodic basis.

7. The method (100) of any one of the preceding claims, comprising generating a presence signal in response to detecting presence by the presence sensor within the space being monitored.

8. The method (100) of claim 7, comprising using the presence signal to actuate over an electric, electronic or mechanical system.

9. The method (100) of any one of the preceding claims, wherein the presence sensor comprises an array of sensing elements.

10. The method (100) of any one of the preceding claims, wherein detecting presence includes detecting a human being or an animal by discriminating the human being or the animal from other heat irradiating elements within the same space being monitored by the presence sensor, upon updating the background information of the pixel matrix.

11. A method for providing information about presence in a space (101), the method comprising:
- obtaining a pixel matrix from a presence sensor, the pixel matrix being associated with a space being monitored by the presence sensor and comprising background information of a presence detection field covered by the presence sensor, and the background information comprising background temperature values for each pixel of the pixel matrix; and
- updating the background information of the presence detection field as described in any one of claims 1 to 10; and
- generating a presence signal by a presence sensor in response to detecting presence within the space.

12. The method of claim 11, comprising using the presence signal to actuate over an electric, electronic or mechanical system.

13. A computer program product comprising instructions which, when the program is executed by a computer, cause the computer to carry out the steps of the method of any of claims 1-12.

14. A system (200) for updating information background of a pixel matrix, wherein the system comprises:
- a presence sensor (201) being configured to generate the pixel matrix associated with a presence detection field of a space being monitored by the presence sensor;
- a processing unit (202) in communication with the presence sensor and configured to:
a) detecting (204) a first set of pixels of the pixel matrix comprising pixels indicative of presence that have at least one adjacent pixel not being indicative of presence, the pixels being indicative of presence when a temperature value of the pixel is above a predefined threshold;
b) for each particular pixel of the first set of pixels, updating (205) a temperature value of the background of the particular pixel of the first set of pixels with:
- an average value of the temperature values of the pixels adjacent to the particular pixel not being indicative of presence, or with
- an average value of the temperature values of adjacent pixels not being indicative of presence and of the background temperature value of updated adjacent pixels;
c) detecting (206) a second set of pixels of the pixel matrix comprising pixels indicative of presence that have at least one adjacent pixel previously updated,
d) for each particular pixel of the second set of pixels, updating (207) a temperature value of the background of the particular pixel of the second set of pixels with an average value of the temperature values of adjacent pixels not being indicative of presence and of the background temperature value of the updated adjacent pixels; and
e) executing (208) steps c) and d) until there are no more pixels in the pixel matrix indicative of presence to be updated.

15. The system (200) of claim 14, wherein the presence sensor is a temperature-based matrix presence sensor or a passive infrared array sensor.
